# EUROPÄISCHE PATENTANMELDUNG

(11) **EP 2 868 755 A1**
(43) Veröffentlichungstag der Anmeldung: **06.05.2015**
(21) Anmeldenummer: 14184797.0
(22) Anmeldetag: 15.09.2014
(51) Int. Cl.: C21D 9/00, A01B 15/04, A01B 23/02, B21D 22/02, C21D 1/673, E02F 3/80, E02F 3/815, E02F 9/28

(54) **Verfahren zur Herstellung eines verschleißfesten Bauteils mit erhöhter Schwingfestigkeit im Anbindungsbereich**

(30) Priorität: 01.10.2013 DE 102013110902
(71) Anmelder: Benteler Defense GmbH & Co. KG, 33602 Bielefeld (DE)
(72) Erfinder: Lambers, Hans-Gerd, 49809 Lingen (DE); Lackmann, Jan, 33098 Paderborn (DE); Sander, Jens, 33106 Paderborn (DE); Enns, Anatoli, 33106 Paderborn (DE)
(74) Vertreter: Griepenstroh, Jörg

(57) **Zusammenfassung**

Die vorliegende Erfindung betrifft ein Verfahren zur Herstellung eines dreidimensional geformten dickwandigen partiell gehärteten Stahlbauteils, wobei das Verfahren folgende Verfahrensschritte aufweist:
- Erwärmen eines härtbaren Stahlplatinenzuschnittes auf über AC3, wobei die Wandstärke des Stahlplatinenzuschnittes zwischen 2 und 40mm beträgt,
- Warmumformen des Stahlplatinenzuschnittes und Presshärten, wobei partielle Bereiche mit einer geringeren Abkühlgeschwindigkeit gekühlt werden, gegenüber der für das Presshärten erforderlichen Abkühlgeschwindigkeit.

## Beschreibung

Die vorliegende Erfindung betrifft ein Verfahren zur Herstellung eines dreidimensional geformten dickwandigen partiell gehärteten Stahlbauteils, insbesondere eines landwirtschaftlich genutzten Verschleißbauteils, bevorzugt einer Pflugschar oder Grubberschar gemäß den Merkmalen im Patentanspruch 1.

Insbesondere beim Einsatz in Produkten, die zur Bodenbearbeitung und/oder zur Erdräumung bzw. Erdbewegung eingesetzt werden, unterliegen die metallischen Bauteile, wie beispielsweise Schaufeln oder aber Scharen an Baggern, Traktoren oder aber auch Scharen an Pflügen oder Eggen, einem erhöhten abrasiven Verschleiß.

Die im Boden befindlichen und insbesondere harten Körper, beispielsweise Steine, rufen an dem Bauteil selbst einen stark erhöhten Verschleiß auf. Aus dem Stand der Technik ist es hierzu insbesondere bekannt, die Bauteile größer dimensioniert auszulegen, so dass die Standfestigkeit erhöht ist.

Seit einigen Jahren ist die Warmumform- und Presshärtetechnologie bekannt, um Bauteile mit erhöhten Festigkeitseigenschaften herzustellen. So ist beispielsweise aus der WO2012/062281 A1 bekannt, Bauteile mit erhöhter Verschleißfestigkeit durch Nutzung der Warmumform- und Presshärtetechnologie herzustellen.

Nachteilig hierbei ist jedoch, dass die gehärteten Bauteile, beispielsweise als Wendeschare an einem Pflug, nicht nur einem starken abrasiven Verschleiß ausgesetzt sind, sondern auch während der Benutzung, beispielsweise beim Wenden von Oberboden in der Landwirtschaft, starken Vibrationen und mithin Schwingungen ausgesetzt sind. Ein entsprechend gehärtetes Bauteil hat somit eine erhöhte Verschleißfestigkeit, ist jedoch wiederum anfällig gegenüber Rissbildungen, insbesondere im Anbindungsbereich. Dies ist insbesondere kritisch, wenn beim Presshärten kostengünstige Mangan-Bor-Stähle eingesetzt werden, die aufgrund fehlenden Ni- oder Co-Gehalt geringe Duktilitäten aufweisen.

Aufgabe der vorliegenden Erfindung ist es daher, Bauteile, insbesondere für Bodenarbeiten und Erdbewegungen, bevorzugt für die landwirtschaftliche Nutzung bereitzustellen, die in ihrer Lebensdauererwartung weiter verbessert sind.

Die zuvor genannte Aufgabe wird erfindungsgemäß mit einem Verfahren zur Herstellung eines dreidimensional geformten dickwandigen partiell gehärteten Stahlbauteils gemäß den Merkmalen im Patentanspruch 1 gelöst.

Vorteilhafte Ausführungsvarianten des erfindungsgemäßen Verfahrens sind Gegenstand der abhängigen Patentansprüche.

Das Verfahren zur Herstellung eines dreidimensional geformten dickwandigen partiell gehärteten Stahlbauteils, insbesondere eines landwirtschaftlich genutzten Verschleißbauteils, bevorzugt einer Pflugschar oder Grubberschar ist gekennzeichnet durch folgende Verfahrensschritte:
- Erwärmen eines härtbaren Stahlplatinenzuschnittes auf über AC3, wobei die Wandstärke des Stahlplatinenzuschnittes zwischen 2 und 40mm beträgt,
- Warmumformen des Stahlplatinenzuschnittes und Presshärten, wobei partielle Bereiche mit einer geringeren Abkühlgeschwindigkeit gekühlt werden, gegenüber der für das Presshärten erforderlichen Abkühlgeschwindigkeit.

Mit dem erfindungsgemäßen Verfahren ist es somit möglich, Baggerschaufeln, Treckerschaufeln, Pflugschare, Grubberschare oder aber auch Wendeschare oder aber Bauteile für eine Egge herzustellen. Erfindungsgemäß ist vorgesehen, dass das Bauteil zum einen dickwandig ausgebildet ist, wobei unter dickwandig im Rahmen der Erfindung insbesondere eine durchschnittliche Wanddicke an dem Bauteil zwischen 2 und 40 mm zu verstehen ist. Zur Erhöhung der Verschleißfestigkeit werden insbesondere die Bereiche, die starkem abrasiven Verschleiß während der Benutzung ausgesetzt sind, mittels der Warmumform- und Presshärtetechnologie gehärtet. Hierzu werden diese Bereiche vollständig austenitisiert und im Anschluss daran derart schnell abgekühlt, dass ein im Wesentlichen vollständig martensitisches Gefüge entsteht.

Erfindungsgemäß kommt somit die Warmumform- und Presshärtetechnologie bei einem extrem dickwandigen Bauteil zum Einsatz, wobei diese aus zuvor bekannten Verfahren gemäß Stand der Technik, insbesondere für Karosseriebauteile mit einer Wandstärke von bis zu 4 mm genutzt wurde. Bevorzugt wird das partiell unterschiedliche Abkühlen in einem Presshärtewerkzeug bzw. in einem kombinierten Warmform- und Presshärtewerkzeug und besonders bevorzugt in einem Abkühlschritt durchgeführt.

Darüber hinaus ist erfindungsgemäß vorgesehen, gezielt partielle Bereiche nicht zu härten. Hierbei handelt es sich insbesondere um die Anbindungsbereiche um beispielsweise einen Pflugschar bzw. Wendeschar an einem entsprechenden Trägergestell zu befestigen. Insbesondere erfolgt diese Befestigung formschlüssig oder reibschlüssig, ganz besonders bevorzugt schraubtechnisch. Hierzu sieht die Erfindung vor, dass dieser Bereich zwar zunächst auf über AC3-Temperatur erwärmt wird, dann jedoch mit einer deutlich geringeren Abkühlgeschwindigkeit abgekühlt wird, gegenüber den vollständig zu härtenden Bereichen. Hierbei wird dann bevorzugt ein ferritisch-perlitisches und/oder bainitisches Gefüge oder bainitischmartensitisches Mischgefüge eingestellt, das gegenüber dem vollständig gehärteten Bereich eine eher duktile Bauteileigenschaft hat. Da es sich hierbei erfindungsgemäß um den Anbindungsbereich handelt, ist es somit möglich, die Lebensdauererwartung auch hierdurch wiederum zu erhöhen. Die auftretenden Schwingungen in dem Bauteil, welche zu einer Rissbildung im Anbindungsbereich und damit zu einem vorzeitigen Auswechseln des Bauteils führen würden, werden dadurch weitestgehend vermieden. Insgesamt wird somit bei dem erfindungsgemäßen Bauteil die Standfestigkeit zum einen durch den harten Bereich in direktem Kontakt mit dem auftretenden abrasiven Verschleiß kompensiert, zum anderen wird der Anbindungsbereich bewusst duktil gehalten, so dass eine Rissbildung vermieden wird und hierdurch kein vorzeitiges Austauschen notwendig würde. Erfindungsgemäß ist es somit möglich, auch kostengünstige kohlenstoffreiche Mangan-Bor Stähle zu verwenden, bei gleichzeitig hoher Standzeit des Bauteils.

Im Rahmen der Erfindung wird dabei bevorzugt aufgrund der hohen Wandstärke des herzustellenden Bauteils aus einer bereitgestellten Platine oder aber von einem bereitgestellten Coil ein Stahlplatinenzuschnitt hergestellt. Insbesondere erfolgt dies durch Laserzuschnitt. Alternativ kann der Stahlplatinenzuschnitt jedoch auch ausgestanzt werden oder mittels eines anderen Trennverfahrens zunächst hergestellt werden. Der so hergestellte Stahlplatinenzuschnitt wird sodann auf über AC3-Temperatur erwärmt, wobei hierzu induktive Erwärmungsvorrichtungen zum Einsatz kommen können oder aber auch eine Kontaktplattenerwärmung, mithin eine konduktive Erwärmung, erfolgen kann. Bevorzugt wird jedoch eine Ofenerwärmung, insbesondere unter Schutzgasatmosphäre genutzt, ganz besonders bevorzugt in einem Durchlaufofen oder aber auch in einem Etagenofen.

Erfindungsgemäß ist es bevorzugt möglich, einen Stahlplatinenzuschnitt mit einer Wandstärke zwischen 3 mm und 25 mm und insbesondere zwischen 4 mm und 15 mm zu verwenden, der dann warmumgeformt und pressgehärtet wird. Hiermit ist es im Rahmen der Erfindung möglich, hohe Biegewinkel, mithin eine hohe Formgebungsfreiheit betreffend der dreidimensionalen Konturierung herzustellen, zum anderen bildet die vorgenannte Wandstärkenauswahl ein Optimum aus aufzubringender Energie zur Erwärmung des Stahlplatinenzuschnitts, Warmumformund Presshärtemöglichkeit sowie damit erreichbarer Standzeit des Bauteils im Feldeinsatz.

Erfindungsgemäß wird insbesondere der partiell geringer gehärtete Bereich, mithin der Bereich, welcher mit erhöhter Duktilität hergestellt werden soll, derart gekennzeichnet, dass er mit einem Gradienten zu dem benachbarten Bereich, der vollständig gehärtet werden soll, abgekühlt wird. Insbesondere wird in dem vollständig zu härtenden Bereich die Abkühlgeschwindigkeit größer der werkstoffspezifischen kritischen Abkühlgeschwindigkeit gewählt, wobei die Abkühlgeschwindigkeit im Anbindungsbereich, kleiner der kritischen Abkühlgeschwindigkeit gewählt wird. Die kritische Abkühlgeschwindigkeit ist die Abkühlgeschwindigkeit, bei der Martinsit in den Werkstoffgefüge eingestellt wird. Wird mit einer kleineren als der kritischen Abkühlgeschwindigkeit abgekühlt, so stellt sich kein Martensitgefüge ein. Für hoch kohlenstoffreiche Legierungen, bevorzugt mit einem Kohlenstoffgehalt größer 0,25 %, liegt die kritische Abkühlgeschwindigkeit üblicherweise zwischen 2 und 25 K/sec. Die in dem Bauteil herrschende Wärmeleitung wird somit während des Härtevorgangs derart reduziert bzw. gesteuert, dass ein scharf berandeter Übergangsbereich ausgebildet werden kann. Es erfolgt mithin hierdurch keine ungewollte Nachhärtung und/oder Nachvergütung, beispielsweise eines nur kleinen duktil ausgebildeten Bereiches zur Anbindung einer Schraube.

Insbesondere wird der scharf berandete Übergangsbereich dadurch realisiert, dass in der Formoberfläche des Presshärtewerkzeuges ein Trennspalt ausgebildet ist. Der partielle Bereich kann beispielsweise durch Heizpatronen oder aber separat steuerbare Kühlkanäle dann ganz gezielt langsamer abgekühlt werden, als der presszuhärtende Bereich. Durch den Trennspalt selber und einen vollflächigen Anlagenkontakt an dem Werkzeug kann dann wiederum in dem Bauteil selbst scharf berandet die Abkühlung hergestellt werden, derart, dass nicht nur die Oberfläche des Bauteils entsprechende Temperaturunterschiede aufweist, sondern die Temperaturunterschiede auch die vollständige Wandstärke des Bauteils durchgreifen und somit der Übergangsbereich scharf berandet einstellbar ist.

Insbesondere hat sich hier eine Werkzeugschließzeit beim Presshärten selbst zwischen 1 und 200 Sekunden, insbesondere zwischen 10 und 60 Sekunden und bevorzugt zwischen 16 bis 40 Sekunden als vorteilig mit den oben genannten Wandstärken erwiesen, um einen entsprechenden Gradienten zwischen vollständig presszuhärtendem Bereich und duktil herzustellendem Bereich einzustellen. Hiermit ist es möglich, das Bauteil beispielsweise durch Verwendung von speziellen härtbaren Stahllegierungen wie Mangan-Bor Stähle herzustellen. Im Rahmen der Erfindung sollten vor allem härtbare Stahllegierungen mit einem Kohlenstoffgehalt größer als 0,25 % gewählt werden. Bevorzugt ist es weiterhin möglich, beschichtetes Vormaterial warmumzuformen und presszuhärten, wobei hier insbesondere eine Aluminiumsiliziumbeschichtung zum Einsatz kommt.

Alternativ ist es auch möglich, beispielsweise 27MnB5, 30MnB5, 37MnB4 als Stahllegierung zu verwenden.

Hiermit sind dann Härten in den pressgehärteten Bereichen zwischen 400 und 700 HB, bevorzugt 600 HB einstellbar.

Weiterhin bietet es sich erfindungsgemäß an, den Stahlplatinenzuschnitt vor dem Erwärmen vorzulochen, beispielsweise durch einen Stanzvorgang oder aber auch einen Schneidvorgang, insbesondere einen Laserschneidvorgang. Im Rahmen der Erfindung ist es jedoch auch weiterhin möglich, den Stahlplatinenzuschnitt warmzulochen, beispielsweise durch einen Stanzvorgang im Umformwerkzeug selber. Die beim Lochen entstehende Ausnehmung liegt dann bevorzugt in dem partiell geringer gekühlten Bereich, mithin in dem duktileren Bereich. Im Rahmen der Erfindung wäre es auch je nach Anwendungsfall möglich, das Bauteil erst nach dem Warmumform- und Presshärtevorgang zu lochen, da insbesondere das Anbindungsloch in dem duktileren Bauteilbereich hergestellt wird.

Im Rahmen der Erfindung ist es weiterhin vorgesehen, dass das hergestellte Bauteil bei Erreichen einer Temperatur des presszuhärtenden Bereiches unterhalb der Martensitfinishtemperatur aus dem Presshärtewerkzeug entnommen wird. Hierbei ist die durchschnittliche über die gesamte Wandstärke des Bauteils gemessene Temperatur zu verstehen und nicht nur die Oberflächentemperatur des Bauteils. Im Gegensatz hierzu hat dann der geringe abgekühlte Bereich bevorzugt eine Zieltemperatur oberhalb der Martensitfinishtemperatur bei Entnahme.

Im Rahmen der Erfindung ist weiterhin ein Selbstanlasseffekt zu verzeichnen, wenn das Bauteil von den vorgenannten Entnahmetemperaturen dann bei Raumtemperatur weiter abkühlt.

Weiterhin ist es im Rahmen der Erfindung besonders bevorzugt möglich, eine Wärmebehandlung bei 150° C bis 200° C, bevorzugt bei 180° C für bis zu fünf Stunden durchzuführen.

Im Rahmen der Erfindung wird das Verfahren insbesondere auf einem Aluminiumwerkzeug derart durchgeführt, dass Aluminiumgrundkörper an einem Oberwerkzeug und einem Unterwerkzeug bereitgestellt werden, deren Oberflächenkontur der des herzustellenden Bauteils entspricht. Damit nunmehr die erhöhten Umformkräfte, welche notwendig sind, um eine entsprechend dickwandige Platine umzuformen, nicht zu einer Deformation der Oberflächenbereiche des hierzu vergleichsweise leicht verformbaren Aluminiums führen, kommen Verschleißschutzplatinen auf die Aluminiumwerkzeugkörper. Die Verschleißschutzplatinen werden bevorzugt in einem Erstinbetriebnahmevorgang des Warmumform- und Presshärtewerkzeuges derart umgeformt, dass drei Platinen in eine obere Verschleißschutzplatine und eine untere Verschleißschutzplatine sowie eine Platine für ein dazwischen umzuformendes Bauteil in die Werkzeuge eingesetzt werden und dann das Werkzeug erstmalig mit der entsprechenden Sorgfalt geschlossen wird. Es ergibt sich zwischen den zwei Verschleißschutzplatinen ein entsprechender Formhohlraum, der aufgrund der darin eingelegten Platine zur Herstellung eines ersten Bauteils die entsprechenden Konturabmessungen aufweist. Gegebenenfalls können hier Nachjustierarbeiten zur Realisierung einer optimalen Passform hergestellt werden. Das so hergestellte Werkzeug bietet insbesondere den Vorteil, dass höchst individuelle Kühlkanalführungen und/oder Kühllochbohrungen herstellbar sind, um bei dem anschließenden, insbesondere partiellen Warmumformen, entsprechende Wärmeabfuhren bereitzustellen. Ebenso bietet der Aluminiumgrundkörper eine hohe Wärmeleitfähigkeit, so dass eine entsprechende Wärmeabfuhrmenge, insbesondere wieder gezielt und scharf berandet, von dem warmumzuformenden und presszuhärtenden Bauteil abführbar ist.

Nachfolgend wird die Erfindung in einer konkreten Ausführungsform anhand einer Zeichnung erläutert. Dabei ergeben sich aus der Beschreibung der Ausführungsform weitere Ziele, Vorteile, Merkmale und/oder Anwendungsmöglichkeiten der vorliegenden Erfindung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung. Es zeigen:

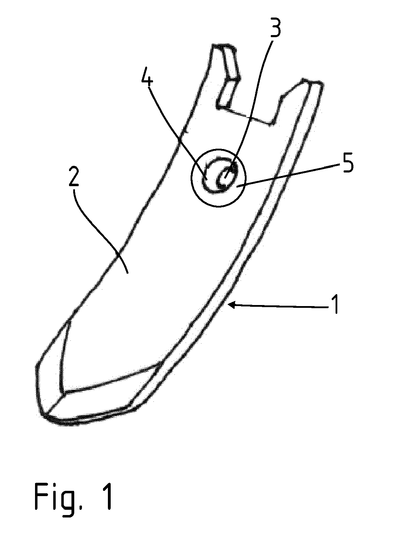

- Fig. 1: eine perspektivische Ansicht einer Scharspitze eines Pfluges oder Grubbers, die mit einem Loch versehen ist, wobei das Loch zur konkav gebogenen Flächenseite hin, ein Fase aufweist und
- Figur 2: ein schematisches ZTU-Diagramm mit verschiedenen Abkühlkurven.

Im Falle der dargestellten Ausführungsvariante der Erfindung wird das warmumgeformte und pressgehärtete, verschleißfeste Stahlbauteil an einem Pflug als eine Scharspitze 1 verwendet. Die Scharspitze 1 weist eine konkav gebogene Flächenseite 2 auf. Durch die Scharspitze 1 hindurch verläuft das Loch 3, wobei das Loch 3 in einem Lochungsschritt mittels zumindest eines Lochwerkzeugs eingebracht worden ist. Der Lochungsschritt wird bevorzugt vor oder während dem Warmumformen und noch vor Beginn des Presshärtens durchgeführt. Somit wird erreicht, dass das Loch 3 in das noch warme Stahlbauteil eingebracht wird. Das Lochwerkzeug wird dabei nach dem Lochungsschritt unmittelbar aus dem noch warmen Stahlbauteil wieder herausgeführt, wodurch vermieden wird, dass eine Aufschrumpfung des Stahlbauteils auf dem Lochwerkzeug erfolgt bzw. erfolgen könnte.

Zur konkav gebogenen Flächenseite 2 des Stahlbauteils hin wird das Stahlbauteil mit einer Fase 4 versehen. Dabei wird die Anfasung des Loches 3 nach der Durchführung des Lochungsschrittes in das noch warme Stahlbauteil durchgeführt oder auch direkt mit der Lochung. Erfindungsgemäß ist die Scharspitze gehärtet, mit Ausnahme eines Bereiches 5, in den das Loch 3 zeigt.

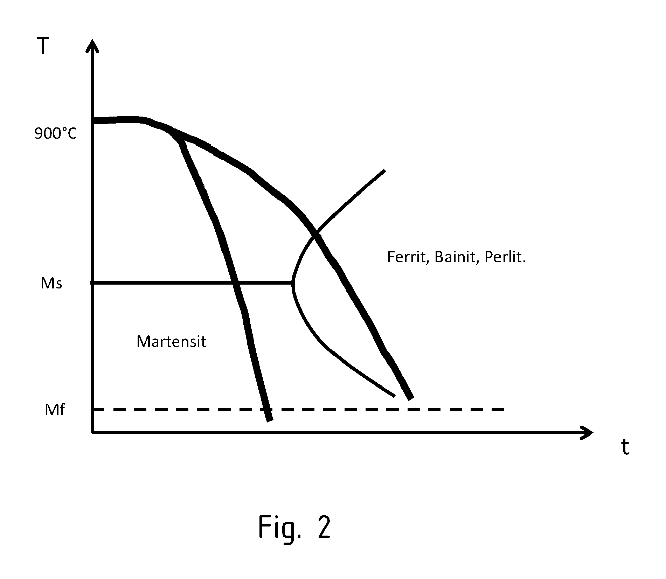

Figur 2 zeigt ein schematisches ZTU-Diagramm, betreffend den Abkühlverlauf. Auf der Y-Achse ist die Temperatur aufgezeigt und auf der X-Achse die Zeit. Ausgehend von einem auf AC3-Temperatur erwärmten Stahlblechplatinenzuschnitt werden dann die zwei Bereiche voneinander verschieden abgekühlt. So ist linksseitig gezeigt die Kurve 6, die der Abkühlung des vollständig zu härtenden Bereichs entspricht und rechtsseitig die Abkühlkurve 7, welche den Abkühlverlauf des geringer abzukühlenden Bereiches zeigt. Die Kurve 6 wird direkt vom austenitischen Bereich in den martensitischen Bereich überführt. Die Kurve 7 verläuft vom austenitischen Bereich in den ferritisch-bainitisch-perlitischen Bereich. Ferner sind die Martensitstarttemperatur Ms sowie Martensitfinishtemperatur Mf eingetragen.

### Bezugszeichen:

- 1: - Scharspitze
- 2: - Flächenseite
- 3: - Loch
- 4: - Fase
- 5: - gering gehärteter Bereich
- 6: - Abkühlkurve zu härtender Bereich
- 7: - Abkühlkurve gering gekühlter Bereich

## Patentansprüche

1. Verfahren zur Herstellung eines dreidimensional geformten dickwandigen partiell gehärteten Stahlbauteils, insbesondere eines landwirtschaftlich genutzten Verschleißbauteils, bevorzugt einer Pflugschar, Grubberschar oder Scharspitze (1), **gekennzeichnet, durch** folgende Verfahrensschritte:
- Erwärmen eines härtbaren Stahlplatinenzuschnittes auf über AC3, wobei die Wandstärke des Stahlplatinenzuschnittes zwischen 2 und 40 mm beträgt,
- Warmumformen des Stahlplatinenzuschnittes und Presshärten, wobei partielle Bereiche mit einer geringeren Abkühlgeschwindigkeit gekühlt werden, gegenüber der für das Presshärten erforderlichen Abkühlgeschwindigkeit.

2. Verfahren nach Anspruch 1, **dadurch gekennzeichnet, dass** ein Stahlplatinenzuschnitt mit einer Wandstärke zwischen 3 und 25 mm und insbesondere 4 und 15 mm verwendet wird.

3. Verfahren nach einem der vorangehenden Ansprüche, **dadurch gekennzeichnet, dass** die Werkzeugschließzeit beim Presshärten zwischen 1 und 300 Sekunden beträgt, insbesondere zwischen 10 und 60 Sekunden, bevorzugt 15 bis 40 Sekunden.

4. Verfahren nach einem der vorangehenden Ansprüche, **dadurch gekennzeichnet, dass** der Gradient durch einen Trennspalt in der Formoberfläche des Presshärtewerkzeuges eingestellt wird.

5. Verfahren nach einem der vorangehenden Ansprüche, **dadurch gekennzeichnet, dass** die Erwärmung unter Schutzgas durchgeführt wird.

6. Verfahren nach einem der vorangehenden Ansprüche, **dadurch gekennzeichnet, dass** der Stahlplatinenzuschnitt vorgelocht wird oder dass der Stahlplatinenzuschnitt in dem Warmformwerkzeug warmgelocht wird, wobei die beim Lochen entstehende Ausnehmung in dem partiell geringer gekühlten Bereich liegt.

7. Verfahren nach einem der vorangehenden Ansprüche, **dadurch gekennzeichnet, dass** in dem pressgehärteten Bereich eine Härte zwischen 450 bis 700 HB eingestellt wird und in dem Bereich mit geringerer Abkühlgeschwindigkeit eine Härte zwischen 200 und 650 HB eingestellt wird.

8. Verfahren nach einem der vorangehenden Ansprüche, **dadurch gekennzeichnet, dass** das hergestellte Bauteil bei Erreichen einer Temperatur in dem presszuhärtenden Bereich unterhalb der werkstoffspezifischen Martensitstarttemperatur, insbesondere zwischen 200°C und 300°C, aus dem Presshärtewerkzeug entnommen wird.

9. Verfahren nach einem der vorangehenden Ansprüche, **dadurch gekennzeichnet, dass** der geringer abgekühlte Bereich auf eine Zieltemperatur oberhalb der werkstoffspezifischen Martensitstarttemperatur, insbesondere zwischen 300°C und 400°C gekühlt wird.

10. Verfahren nach einem der vorangehenden Ansprüche, **dadurch gekennzeichnet, dass** eine Wärmebehandlung bei 150°C bis 200°C, bevorzugt bei 180°C für bis zu 5 Stunden durchgeführt wird.

11. Verfahren nach einem der vorhergehenden Ansprüche, **dadurch gekennzeichnet, dass** das Warmumformen und Presshärten auf einem zweiteiligen Werkzeug durchgeführt wird, welches ein Oberwerkzeug und ein Unterwerkzeug aufweist und das Oberwerkzeug und/oder das Unterwerkzeug einen Aluminiumgrundkörper und eine darauf angeordnete Verschleißschutzplatine aufweist, wobei die Verschleißschutzplatine und/oder der Aluminiumgrundkörper segmentiert sind, so dass eine partielle Wärmeabfuhr zur gezielten Berandung der Bereiche mit voneinander verschiedenen Abkühlgeschwindigkeiten ermöglicht wird.
